# EUROPEAN PATENT SPECIFICATION

(11) **EP 2 368 767 B1**
(45) Date of publication and mention of the grant of the patent: **13.03.2019**
(21) Application number: 09833235.6
(22) Date of filing: 18.12.2009
(51) Int. Cl.: H04M 1/00, H04M 1/725, H04M 1/60

(54) **WIRELESS COMMUNICATION CONTROL METHOD, WIRELESS COMMUNICATION CONTROL DEVICE, AND IN-VEHICLE ACOUSTIC DEVICE**
DRAHTLOSES KOMMUNIKATIONSSTEUERUNGSVERFAHREN, DRAHTLOSE KOMMUNIKATIONSSTEUERUNGSVORICHTUNG UND IN EINEM FAHRZEUG MONTIERTE AKUSTISCHE VORRICHTUNG
PROCÉDÉ DE COMMANDE DE COMMUNICATION SANS FIL, DISPOSITIF DE COMMANDE DE COMMUNICATION SANS FIL ET DISPOSITIF ACOUSTIQUE EMBARQUÉ

(30) Priority: 19.12.2008 JP 2008323693
(43) Date of publication of application: 28.09.2011
(73) Proprietor: Panasonic Intellectual Property Management Co., Ltd., Osaka-shi, Osaka 540-6207 (JP)
(72) Inventor: TAKIZAWA, Taiki, Osaka 540-6207 (JP)
(74) Representative: Grünecker Patent- und Rechtsanwälte PartG mbB
(86) International application number: PCT/JP2009/007032
(87) International publication number: WO 2010/070928

(56) References cited:
- JP-A- 10 275 408
- JP-A- 2006 284 755
- JP-A- 2008 269 482
- JP-A- 2008 305 538
- US-A1- 2008 266 067
- Audio Video Wg: "BLUETOOTH DOC Date / Year-Month-Day Approved Revision Document No 2008-06-26 V14r00 AVRCP_SPEC Prepared e-mail address AUDIO/VIDEO REMOTE CONTROL PROFILE", , 26 June 2008 (2008-06-26), pages 1-166, XP055084602, DOI: AVRCP_SPEC V14r00 Retrieved from the Internet: URL:https://www.bluetooth.org/en-us/specif ication/adopted-specifications [retrieved on 2013-10-21]

## Description

### Technical Field

The present invention relates to a method of controlling wireless communication that controls a portable audio apparatus by performing short-range wireless communication, and an in-vehicle audio apparatus.

### Background Art

As a conventional audio apparatus that performs control of a portable audio apparatus by performing short-range wireless communication, a speaker system including a wireless receiving pack and a speaker unit is known (e.g. see patent literature 1). The wireless receiving pack receives an audio signal from the portable audio apparatus using Bluetooth (registered trademark, applies similarly hereinafter) communication, which is a short-range radio. The speaker unit is connected to this wireless receiving pack, and, upon receiving this audio signal, outputs the audio signal as a sound.

### Citation List

### Patent Literature

PTL 1
Japanese Patent Application Laid-Open No.2007-336511 (paragraph 32 to paragraph 34)

### Summary of Invention

### Technical Problem

Conventionally, a portable audio apparatus of a conventional device and an in-vehicle audio apparatus used by installing it in a vehicle have been caused to communicate wirelessly and reproduce data of the portable audio apparatus in the in-vehicle audio apparatus, that is, an operation of the portable audio apparatus using an operating section of the in-vehicle audio apparatus has been performed.

However, when a portable audio apparatus i s operated via an in-vehicle audio apparatus like this, cases occur where the user is unable to operate the portable audio apparatus as he or she desires.

The reasons include the following. In the operating section of the in-vehicle audio apparatus, typically, a play button that controls the portable audio apparatus into a playing state and a pause button that controls the portable audio apparatus into either a stopped state or a paused state are allotted to one common button (hereinafter referred to as "play/pause button"). This is to make efficient use of a limited space inside a vehicle.

Thus, when the play/pause button is pressed while the portable audio apparatus is playing, the in-vehicle audio apparatus must have the play/pause button to operate as a pause button. Further, when the play/pause button is pressed at a time other than when the portable audio apparatus is playing, the in-vehicle audio apparatus must have the play/pause button to operate as a play button.

However, among in-vehicle audio apparatuses, there are apparatuses in which operation states of the portable audio apparatus such as "playing," "stopped," "paused," "fast-forwarding," "rewinding," etc. cannot be acquired. By this means, with a conventional in-vehicle audio apparatus, there is a problem that a control signal that does not match the operation state of a portable audio apparatus is sent (for example, a signal commanding to stop is sent to the portable audio apparatus while the portable audio apparatus is stopped, etc.), and this confuses the operator.
Further, the document "Audio/Video Remote Control Profile" by Audio Video WG (Revision V14r00, number AVRCP_SPEC, 2008-06-26) discloses a functionality "GetPlayStatus" in section 6.7. This functionality is used to get the status of the currently playing media.

It is therefore desirable to provide a method of controlling wireless communication, a wireless communication control apparatus, and an in-vehicle audio apparatus that are capable of accurately controlling a portable audio apparatus by using one button.

### Solution to Problem

The present invention is defined by the subject matter of the independent claims. A preferred embodiment is claimed in claim 3.

In an example useful for understanding the background of the present invention, there is provided a control method for an in-vehicle audio apparatus to control a portable audio apparatus through wireless communication. The method has a configuration that includes the steps of:
determining whether or not it is possible to acquire an operation state of the portable audio apparatus from the portable audio apparatus; receiving a signal indicating a streaming state in the portable audio apparatus from the portable audio apparatus; determing the streaming state in the portable audio apparatus from the received signal when it is not possible to acquire the operation state of the portable audio apparatus; transmitting a stop signal for stopping a playback operation of the portable audio apparatus to the portable audio apparatus, when a predetermined operation is performed on an operation button and it is determined that streaming is in progress in the portable audio apparatus; and transmitting a playback signal for starting the playback operation of the portable audio apparatus to the portable audio apparatus when the predetermined operation is performed on the operation button, and it is determined that streaming is not in progress in the portable audio apparatus, wherein the operation button is a single operation button, and the stop signal and the playback signals are different signals.

According to this configuration, even when it is not possible to acquire the operation state of the portable audio apparatus from the portable audio apparatus, it is possible to determine the operation state based on the streaming state in the portable audio apparatus, the operation state of the portable audio apparatus can be controlled into an accurate operation state.

Further, in another example not being part of the invention, there is provided a wireless communication control apparatus which has a configuration that comprises: a receiving section that receives a signal representing a streaming state in the portable audio apparatus transmitted from the portable audio apparatus; a determining section that determines the streaming state in the portable audio apparatus from the signal received by the receiving section; and a transmitting section that transmits an operation command signal to the portable audio apparatus, the operation command signal being for switching an operation state of the portable audio apparatus in accordance with an operation signal of an operation section connected to the wireless communication control apparatus; wherein the operation command signal includes a stop command signal for stopping a playback operation of the portable audio apparatus and a playback command signal for starting the playback operation of the portable audio apparatus, the transmitting section transmits the stop command signal to the portable audio apparatus when the operation section is operated and streaming is in progress in the portable audio apparatus, and transmits the playback command signal to the portable audio apparatus when the operation section is operated and streaming is not in progress in the portable audio apparatus.

Further, the wireless communication control apparatus has a configuration that uses Bluetooth communication as a wireless communication method between the portable audio apparatus and the wireless communication control apparatus.

Further, in another example, there is provided an in-vehicle audio apparatus to control a portable audio apparatus through wireless communication, where the in-vehicle audio apparatus has a configuration that comprises: a receiver adapted to receive a signal indicating a streaming state in the portable audio apparatus transmitted from the portable audio apparatus; a determiner adapted to determine whether it is possible to acquire an operation state of the portable audio apparatus from the portable audio apparatus and determine the streaming state in the portable audio apparatus from the signal received by the receiver when it is not possible to acquire the operation state of the portable audio apparatus;
an operation button; a detector adapted to detect that a predetermined operation has been performed on the operation button; and a transmitter adapted to transmit an operation command signal to the portable audio apparatus, the operation command signal switching the operation state of the portable audio apparatus in accordance with a detection result of the detector; wherein: the operation command signal includes a stop command signal for stopping a playback operation of the portable audio apparatus or a playback command signal for starting the playback operation of the portable audio apparatus; and the transmitter is adapted to transmit the stop command signal to the portable audio apparatus when the predetermined operation is performed on the operation button and it is determined that streaming is in progress in the portable audio apparatus, and transmit the playback command signal to the portable audio apparatus when the predetermined operation is performed on the operation button and it is determined that streaming is not in progress in the portable audio apparatus; wherein the operation button is a single operation button and the stop command signal and the playback command signal are different signals.

According to this configuration, even when it is not possible to acquire the operation state of the portable audio apparatus from the portable audio apparatus, it is possible to determine the operation state based on the streaming state in the portable audio apparatus, so that the operation state of the portable audio apparatus can be controlled into the accurate operation state by using a single button.

### Advantageous Effects of the Application

By this means, the present technique determines, from a portable audio apparatus connected with an audio apparatus through wireless communication, whether music data is streaming on the wireless communication. By this means, the present technique can provide an audio apparatus that accurately judges the operation state of the portable audio apparatus even if the portable audio apparatus is one of those from which the operation states such as playing, stopped, and paused cannot be acquired, and by which the portable audio apparatus can be accurately controlled by a single operation button.

### Brief Description of Drawings

FIG. 1 is a block diagram of an audio apparatus of an embodiment of the present invention;
FIG.2 is a flow chart illustrating an operation of the audio apparatus of the present embodiment; and
FIG.3 is an application diagram of other audio apparatuses of the present embodiment.

### Description of Embodiments

It is hereby noted that throughout the description, the term "embodiment" does in itself not mean that such embodiment is necessarily an embodiment of the invention. The invention is defined by the appended claims.

Hereinafter, an audio apparatus of an embodiment of the present application will be described with reference to the accompanying drawings.

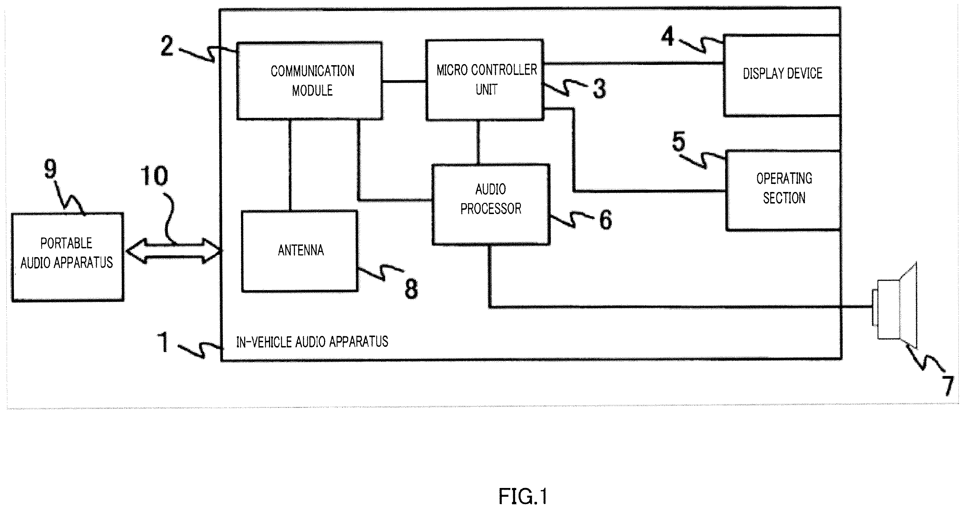

The function blocks of an in-vehicle audio apparatus according to an embodiment of the present invention is shown in FIG.1.

In the embodiment of the present invention, Bluetooth communication is used as short-range wireless communication between a portable audio apparatus and the audio apparatus.

In FIG.1, in-vehicle audio apparatus 1 as the in-vehicle audio apparatus is composed of communication module 2, micro controller unit 3, display device 4, operating section 5, audio processor 6, speaker 7 and antenna 8. Portable audio apparatus 9 as a portable audio apparatus is connected to in-vehicle audio apparatus 1.

Communication module 2 is a Bluetooth module. Antenna 8 is a Bluetooth antenna. Further, portable audio apparatus 9 is a Bluetooth audio apparatus. That is, portable audio apparatus 9 is connected to in-vehicle audio apparatus 1 using a Bluetooth audio connection through Bluetooth communication 10.

Communication module 2 is, for example, a wireless communication control apparatus formed with a plurality of micro controller units. The micro controller units to constitute communication module 2 include, for example, a micro controller unit as a determining section for performing a profile connection of a Bluetooth audio profile defined by the Bluetooth audio profile. Further, the micro controller units to constitute communication module 2 include a micro controller unit for decoding Bluetooth audio music data defined by the Bluetooth audio profile (hereinafter simply referred to as "music data"). Antenna 8 is a receiving section and a transmitting section that inputs and outputs radio waves to realize Bluetooth communication. Micro controller unit 3 includes a detecting section that controls communication module 2 based on an operation signal generated in response to an operation by an operator at operating section 5. Display device 4 displays play information such as music title information, playing time information, etc., that are transmit via communication module 2 and micro controller unit 3 from portable audio apparatus 9.

Operating section 5 is connected to micro controller unit 3 using a bus connection, and is formed with a play/pause button, a fast-forward button, a rewind button, etc. The play/pause button is a single operation button in which a play button for switching an operation state of portable audio apparatus 9 (hereinafter referred to as "operated-side operation state") to "playing" and a pause button that controls the operated-side operation state to be either "stopped" or "paused" are in common. That is, the play/pause button receives a command to change the operation state of portable audio apparatus 9 from the operator. The fast-forward button is a button for controlling the operated-side operation state to be fast-forwarding. The rewind button is a button for controlling the operated-side operation state to be rewinding. Micro controller unit 3 detects operation information generated as a result of the operator pressing operating section 5, and transmits the detected operation information to communication module 2 via a serial communication.

Communication module 2 converts the operation information received from micro controller unit 3 to a Bluetooth audio command defined by the Bluetooth audio profile, and transmits the same to portable audio apparatus 9. By this means, communication module 2 ca control portable audio apparatus 9.

On the other hand, the music data is encoded in portable audio apparatus 9, and is sent to communication module 2 via antenna 8. Then, communication module 2 decodes the music data, and outputs the same to audio processor 6.

Audio processor 6 is an audio processor that performs signal processing on the music data input from communication module 2 and outputs the same to speaker 7.

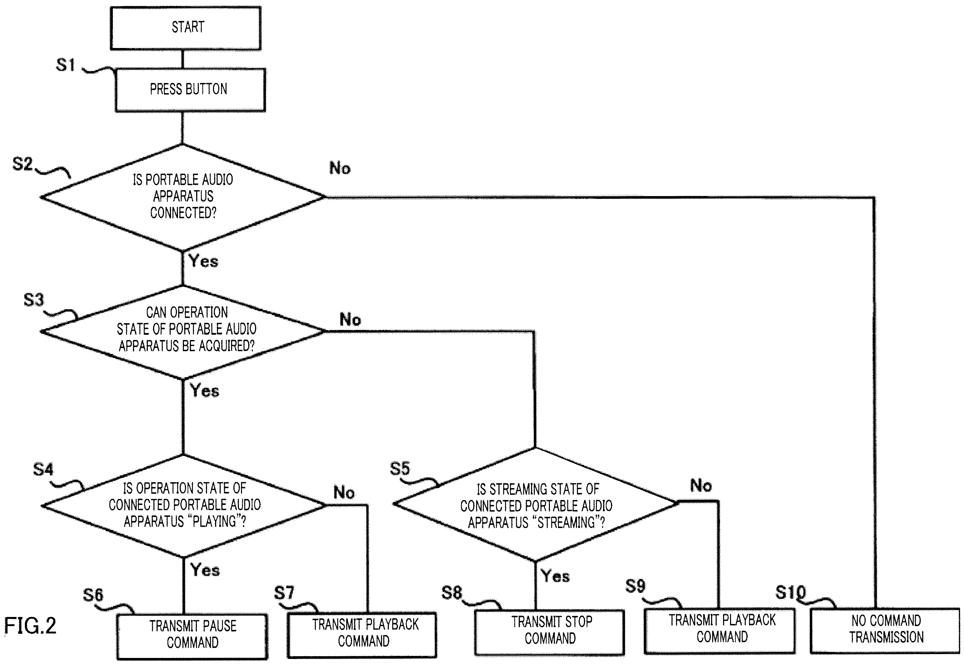

Next, the operation of in-vehicle audio apparatus 1 configured as above will be described with reference to FIG.2.

For example, in-vehicle audio apparatus 1 and portable audio apparatus 9 are connected using Bluetooth audio connection as aforementioned, and the operated-side operation state is playing. Further, the operation state of in-vehicle audio apparatus 1 is in the playing state, and a Bluetooth audio of portable audio apparatus 9 is output (streaming is in progress) from speaker 7 of in-vehicle audio apparatus 1. At this occasion, the operator may e.g. wish to bring portable audio apparatus 9 to a stopped/paused state, and press a play/stop button of in-vehicle audio apparatus 1.

Further, although in-vehicle audio apparatus 1 and portable audio apparatus 9 are connected using Bluetooth audio connection, the operated-side operation state and the operation state of in-vehicle audio apparatus 1 are both being stopped (streaming is not in progress). At this occasion, the operator may e.g. wish to bring portable audio apparatus 9 to the playing state, and press the play/stop button of in-vehicle audio apparatus 1.

When the play/stop button of in-vehicle audio apparatus 1 is pressed, operating section 5 generates the operation information that indicates that the play/stop button has been pressed (S1).

Micro controller unit 3 detects the operation information that indicates that the play/stop button has been pressed (hereinafter referred to as "press information"). Communication module 2 receives the press information detected by micro controller unit 3 from micro controller unit 3.

As a result of this, based on the press information received from micro controller unit 3, communication module 2 decides whether to transmit a playback command, or one of a pause command and a stop command to portable audio apparatus 9 through processing as below in respective steps.

Here, the playback command is a Bluetooth audio control command (a playback signal) defined by the Bluetooth audio profile for causing a playback operation. Further, the pause command is a Bluetooth audio control command (a pause signal) defined by the Bluetooth audio profile for causing a pausing operation. Further, the stop command is a Bluetooth audio control command (a stop signal) defined by the Bluetooth audio profile for causing a stopping operation.

In-vehicle audio apparatus 1 judges whether or not Bluetooth audio connection has been established with portable audio apparatus 9 (S2). In-vehicle audio apparatus 1 makes this judgment by judging whether or not the Bluetooth audio profile connection defined by the Bluetooth audio profile is established with portable audio apparatus 9.

When portable audio apparatus 9 is not connected to in-vehicle audio apparatus 1 using Bluetooth audio connection (S2: "NO"), in-vehicle audio apparatus 1 proceeds to step S10. Here, in-vehicle audio apparatus 1 does not transmit any of the aforementioned commands to portable audio apparatus 9 (S10). In this case, in-vehicle audio apparatus 1 transmits, to display device 4 via micro controller unit 3, information indicating that portable audio apparatus 9 is not connected, and displays the same for the operator.

When portable audio apparatus 9 is connected to in-vehicle audio apparatus 1 using Bluetooth audio connection (S2: "YES"), in-vehicle audio apparatus 1 proceeds to step S3. Here, communication module 2 judges whether or not portable audio apparatus 9 supports an operation state acquisition command. Here, the operation state acquisition command is a command defined by the Bluetooth audio profile that requests another apparatus to return its operation state. That is, communication module 2 judges whether or not portable audio apparatus 9 is an apparatus from which the operation state thereof can be acquired by communication module 2 (S3). Communication module 2 makes this judgment based on a version of the Bluetooth audio profile of portable audio apparatus 9 as defined by the Bluetooth audio profile.

When portable audio apparatus 9 is an apparatus from which the operation state (the operated-side operation state) thereof can be acquired (S3: "YES"), communication module 2 acquires a signal indicating the operated-side operation state from portable audio apparatus 9. Then, communication module 2 judges whether or not the operated-side operation state indicated by the acquired signal is playing, and decides a command to be sent based on a judgment result. That is, communication module 2 decides which one of the playback command, the pause command and the stop command is to be sent to portable audio apparatus 9 based on the operated-side operation state (S4).

When it is judged that the operated-side operation state is playing (S4: "YES"), communication module 2 transmits the pause command to portable audio apparatus 9 (S6).

Further, when it is judged that the operated-side operation state is other than playing (S4: "NO"), communication module 2 transmits the playback command to portable audio apparatus 9 (S7).

When portable audio apparatus 9 is an apparatus from which the operation state (the operated-side operation state) thereof cannot be acquired (S3: "NO"), communication module 2 acquires a signal indicating a Bluetooth audio streaming state of portable audio apparatus 9 (hereinafter referred to as "streaming state") from portable audio apparatus 9. Here, the streaming state is information indicating whether or not the music data defined by the Bluetooth audio profile is output through the wireless communication. Communication module 2 judges whether or not the streaming state indicated by the acquired signal is streaming, and decides a command to be sent based on a judgment result. That is, communication module 2 decides which one of the playback command, the pause command and the stop command is to be sent to portable audio apparatus 9 based on the streaming state (S5).

When it is judged that the streaming state is streaming (S5: "YES"), communication module 2 transmits the stop command to portable audio apparatus 9 (S8).

Further, when it is judged that the streaming state is other than streaming (S5: "NO"), communication module 2 transmits the playback command to portable audio apparatus 9 (S9).

By this means, in-vehicle audio apparatus 1 of the embodiment of the present invention can accurately grasp the operation state of portable audio apparatus 9 that is connected with in-vehicle audio apparatus 1 using Bluetooth connection. By this means, in-vehicle audio apparatus 1 has the play button and the pause button as a common button, and in the configuration of controlling the operation state of portable audio apparatus 9 by receiving operations on this button, the operation of portable audio apparatus 9 can be controlled appropriately.

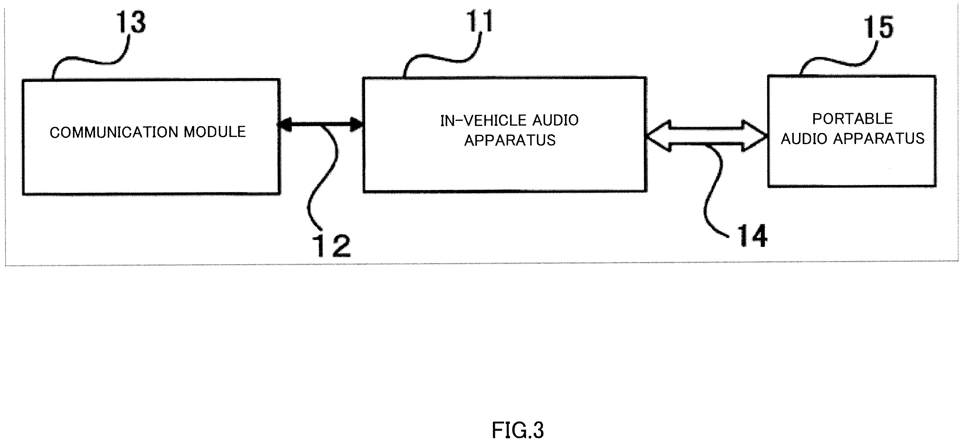

Note that, in the foregoing explanation, the description had been made based on an example with a configuration in which communication module 9 for controlling portable audio apparatus 2 is arranged inside in-vehicle audio apparatus 11, however, the configuration of a system to which the present invention is to be applied is not limited to this. For example, as shown in FIG.3, communication module 13 as the Bluetooth module may be arranged outside in-vehicle audio apparatus 11 or the like as the audio apparatus, and may control portable audio apparatus 15 as the Bluetooth audio apparatus via in-vehicle audio apparatus 11 or the like. That is, the present invention can similarly be implemented even in a configuration in which in-vehicle audio apparatus, etc. 11 controls portable audio apparatus 15 indirectly through wireless communication 14. In this case, for instance, communication module 13 is connected via in-vehicle audio apparatus 11 and LAN 12.

### Industrial Applicability

As described above, the wireless communication control method, wireless communication control apparatus and in-vehicle audio apparatus of the present invention are designed to acquire, from a portable audio apparatus wirelessly connected with an in-vehicle audio apparatus, whether or not music data is output through wireless communication. By this means, even with a portable audio apparatus from which the operation state such as playing, stopped and paused cannot be acquired, the wireless communication control method, wireless communication control apparatus and in-vehicle audio apparatus of the present invention can accurately judge the operation state of the portable audio apparatus. By this means, the wireless communication control method, and in-vehicle audio apparatus of the present invention can accurately judge the operation state of the portable audio apparatus with a single button.

By this means, the present invention is useful in applying to an in-vehicle audio apparatus, etc. that controls a portable audio apparatus by performing short-range wireless communication.

### Reference Signs List

- 1: IN-VEHICLE AUDIO APPARATUS
- 2: COMMUNICATION MODULE
- 3: MICRO CONTROLLER UNIT
- 4: DISPLAY DEVICE
- 5: OPERATING SECTION
- 6: AUDIO PROCESSOR
- 7: SPEAKER
- 8: ANTENNA
- 9: PORTABLE AUDIO APPARATUS
- 11: IN-VEHICLE AUDIO APPARATUS
- 12: BUS/LAN
- 13: COMMUNICATION MODULE
- 15: PORTABLE AUDIO APPARATUS

## Claims

1. A control method for an in vehicle audio apparatus (1) to control a portable audio apparatus (9) through wireless communication, the method comprising:
determining (S3) whether it is possible to acquire an operation state of the portable audio apparatus from the portable audio apparatus;
receiving a signal indicating a streaming state in the portable audio apparatus from the portable audio apparatus;
determining (S5) the streaming state in the portable audio apparatus from the received signal when it is not possible to acquire the operation state of the portable audio apparatus;
transmitting (S8) a stop signal for stopping a playback operation of the portable audio apparatus, to the portable audio apparatus, when a predetermined operation is performed on an operation button and it is determined that streaming is in progress in the portable audio apparatus; and
transmitting (S9) a playback signal for starting the playback operation of the portable audio apparatus, to the portable audio apparatus, when the predetermined operation is performed on the operation button and it is determined that streaming is not in progress in the portable audio apparatus,
wherein the operation button is a single operation button and the stop signal and the playback signal are different signals.

2. An in-vehicle audio apparatus (1) for controlling a portable audio apparatus (9) through wireless communication, the in-vehicle audio apparatus (1) comprising:
a receiver (2, 8) adapted to receive a signal indicating a streaming state in the portable audio apparatus transmitted from the portable audio apparatus;
a determiner (3) adapted to determine whether it is possible to acquire an operation state of the portable audio apparatus from the portable audio apparatus and determine the streaming state in the portable audio apparatus from the signal received by the receiver (2, 8) when it is not possible to acquire the operation state of the portable audio apparatus;
an operation button (5);
a detector (3) adapted to detect that a predetermined operation has been performed on the operation button (5); and
a transmitter (2, 8) adapted to transmit an operation command signal to the portable audio apparatus (9), the operation command signal switching the operation state of the portable audio apparatus (9) in accordance with a detection result of the detector (3);
wherein: the operation command signal includes a stop command signal for stopping a playback operation of the portable audio apparatus or a playback command signal for starting the playback operation of the portable audio apparatus; and
the transmitter (2, 8) is adapted to transmit the stop command signal to the portable audio apparatus when the predetermined operation is performed on the operation button (5) and it is determined that streaming is in progress in the portable audio apparatus, and transmit the playback command signal to the portable audio apparatus when the predetermined operation is performed on the operation button (5) and it is determined that streaming is not in progress in the portable audio apparatus ;
wherein the operation button is a single operation button and the stop command signal and the playback command signal are different signals.

3. An in-vehicle audio apparatus according to claim 2, adapted to use Bluetooth communication is used for communication between the portable audio apparatus and the in-vehicle audio apparatus.

## Patentansprüche

1. Steuerungsverfahren für eine fahrzeuginterne Audiovorrichtung (1) zur Steuerung einer tragbaren Audiovorrichtung (9) durch drahtlose Kommunikation, wobei das Verfahren umfasst:
Ermitteln (S3), ob es möglich ist, einen Funktionszustand der tragbaren Audiovorrichtung aus der tragbaren Audiovorrichtung zu erhalten;
Empfangen eines Signals aus der tragbaren Audiovorrichtung, das einen Datenstromzustand in der tragbaren Audiovorrichtung angibt;
Ermitteln (S5) des Datenstromzustands in der tragbaren Audiovorrichtung aus dem empfangenen Signal, wenn es nicht möglich ist, den Funktionszustand der tragbaren Audiovorrichtung zu erhalten;
Senden (S8) eines Stoppsignals an die tragbare Audiovorrichtung zum Anhalten einer Wiedergabefunktion der tragbaren Audiovorrichtung, wenn eine vorbestimmte Betätigung an einem Funktionsknopf ausgeführt wird und ermittelt wird, dass ein Datenstrom in der tragbaren Audiovorrichtung im Gange ist; und
Senden (S9) eines Wiedergabesignals an die tragbare Audiovorrichtung zum Starten der Wiedergabefunktion der tragbaren Audiovorrichtung, wenn die vorbestimmte Betätigung an dem Funktionsknopf ausgeführt und ermittelt wird, dass ein Datenstrom in der tragbaren Audiovorrichtung nicht im Gange ist,
wobei der Funktionsknopf ein einziger Funktionsknopf ist und das Stoppsignal und das Wiedergabesignal unterschiedliche Signale sind.

2. Fahrzeuginterne Audiovorrichtung (1) zur Steuerung einer tragbaren Audiovorrichtung (9) durch drahtlose Kommunikation, wobei die fahrzeuginterne Audiovorrichtung (1) aufweist:
einen Empfänger (2, 8), der ausgebildet ist, ein Signal zu empfangen, das einen Datenstromzustand in der tragbaren Audiovorrichtung kennzeichnet und das von der tragbaren Audiovorrichtung gesendet wird;
eine Ermittlungseinheit (3), die ausgebildet ist zu ermitteln, ob es möglich ist, einen Funktionszustand der tragbaren Audiovorrichtung aus der tragbaren Audiovorrichtung zu erhalten, und den Datenstromzustand in der tragbaren Audiovorrichtung aus dem Signal zu ermitteln, das von dem Empfänger (2, 8) empfangen wird, wenn es nicht möglich ist, den Funktionszustand der tragbaren Audiovorrichtung zu erhalten;
einen Funktionsknopf (5);
einen Detektor (3), der ausgebildet ist zu erkennen, dass eine vorbestimmte Betätigung an dem Funktionsknopf (5) ausgeführt worden ist; und
einen Sender (2, 8), der ausgebildet ist, ein Funktionsbefehlssignal an die tragbare Audiovorrichtung (9) zu senden, wobei das Funktionsbefehlssignal den Funktionszustand der tragbaren Audiovorrichtung (9) entsprechend einem Erkennungsergebnis des Detektors (3) umschaltet;
wobei: das Funktionsbefehlssignal ein Stoppbefehlssignal zum Anhalten einer Wiedergabefunktion der tragbaren Audiovorrichtung oder ein Wiedergabebefehlssignal zum Starten der Wiedergabefunktion der tragbaren Audiovorrichtung enthält; und
der Sender (2, 8) ausgebildet ist, das Stoppbefehlssignal an die tragbare Audiovorrichtung zu senden, wenn die vorbestimmte Betätigung an dem Funktionsknopf (5) ausgeführt wird, und ermittelt wird, dass ein Datenstrom in der tragbaren Audiovorrichtung im Gange ist, und das Wiedergabebefehlssignal an die tragbare Audiovorrichtung zu senden, wenn die vorbestimmte Betätigung an dem Funktionsknopf (5) ausgeführt und ermittelt wird, dass ein Datenstrom in der tragbaren Audiovorrichtung nicht im Gange ist;
wobei der Funktionsknopf ein einziger Funktionsknopf und das Stoppbefehlssignal und das Wiedergabebefehlssignal unterschiedliche Signale sind.

3. Fahrzeuginterne Audiovorrichtung nach Anspruch 2, die ausgebildet ist, eine Bluethooth-Kommunikation zur Kommunikation zwischen der tragbaren Audiovorrichtung und der fahrzeuginternen Audiovorrichtung zu verwenden.

## Revendications

1. Procédé de commande destiné à un appareil audio embarqué (1) afin de commander un appareil audio portatif (9) par l'intermédiaire d'une communication sans fil, le procédé comprenant :
la détermination (S3) de ce qu'il est possible d'acquérir un état fonctionnel de l'appareil audio portatif à partir de l'appareil audio portatif,
la réception d'un signal indiquant un état de transmission en continu dans l'appareil audio portatif à partir de l'appareil audio portatif,
la détermination (S5) de l'état de transmission en continu dans l'appareil audio portatif à partir du signal reçu lorsqu'il n'est pas possible d'acquérir l'état fonctionnel de l'appareil audio portatif,
la transmission (S8) à l'appareil audio portatif d'un signal d'arrêt destiné à stopper une opération de reproduction de l'appareil audio portatif lorsqu'une opération prédéterminée est effectuée sur un bouton de manoeuvre et qu'il est déterminé qu'une transmission en continu est en cours dans l'appareil audio portatif, et
la transmission (S9) à l'appareil audio portatif d'un signal de reproduction destiné à débuter l'opération de reproduction de l'appareil audio portatif lorsque l'opération prédéterminée est effectuée sur le bouton de manoeuvre et qu'il est déterminé qu'aucune transmission en continu n'est en cours dans l'appareil audio portatif,
dans lequel le bouton de manoeuvre est un bouton à actionnement unique et dans lequel le signal d'arrêt et le signal de reproduction sont des signaux différents.

2. Appareil audio embarqué (1) destiné à commander un appareil audio portatif (9) par l'intermédiaire d'une communication sans fil, l'appareil audio embarqué (1) comprenant :
un récepteur (2, 8) conçu pour recevoir un signal indiquant un état de transmission en continu dans l'appareil audio portatif qui est transmis depuis l'appareil audio portatif,
un dispositif de détermination (3) conçu pour déterminer s'il est possible d'acquérir un état fonctionnel de l'appareil audio portatif à partir de l'appareil audio portatif et pour déterminer l'état de transmission en continu dans l'appareil audio portatif à partir du signal reçu par le récepteur (2, 8) lorsqu'il n'est pas possible d'acquérir l'état fonctionnel de l'appareil audio portatif,
un bouton de manoeuvre (5),
un détecteur (3) conçu pour détecter que l'opération prédéterminée a été effectuée sur le bouton de manoeuvre (5), et
un émetteur (2, 8) conçu pour transmettre un signal d'ordre d'opération à l'appareil audio portatif (9), le signal d'ordre d'opération basculant l'état fonctionnel de l'appareil audio portatif (9) en fonction du résultat de détection du détecteur (3),
dans lequel : le signal d'ordre d'opération inclut un signal d'ordre d'arrêt destiné à stopper une opération de reproduction de l'appareil audio portatif ou bien un signal d'ordre de reproduction destiné à débuter l'opération de reproduction de l'appareil audio portatif, et
l'émetteur (2, 8) est conçu pour transmettre le signal d'ordre d'arrêt à l'appareil audio portatif lorsque l'opération prédéterminée est effectuée sur le bouton de manoeuvre (5) et qu'il est déterminé qu'une transmission en continu est en cours dans l'appareil audio portatif, et pour transmettre le signal d'ordre de reproduction à l'appareil audio portatif lorsque l'opération prédéterminée est effectuée sur le bouton de manoeuvre (5) et qu'il est déterminé qu'aucune transmission en continu n'est en cours dans l'appareil audio portatif,
dans lequel le bouton de fonctionnement est un bouton à manoeuvre unique, et dans lequel le signal d'ordre d'arrêt et le signal d'ordre de reproduction sont des signaux différents.

3. Appareil audio embarqué selon la revendication 2, conçu pour utiliser une communication au standard Bluetooth, lequel est utilisé en vue d'une communication entre l'appareil audio portatif et l'appareil audio embarqué.
